# DEMANDE DE BREVET EUROPEEN

(11) **EP 4 349 640 A1**
(43) Date de publication de la demande: **10.04.2024**
(21) Numéro de dépôt: 23196029.5
(22) Date de dépôt: 07.09.2023
(51) Int. Cl.: B60L 53/34, B60L 53/126, B60L 50/64, B60L 50/60, B60L 53/22

(54) **EQUIPEMENT DE CHARGE D'UNITÉS DE STOCKAGE D'ÉNERGIE ÉLECTRIQUE DE VÉHICULES**

(30) Priorité: 12.09.2022 FR 2209090
(71) Demandeur: Valeo Systèmes de Contrôle Moteur, 95892 Cergy - Pontoise (FR)
(72) Inventeur: ALLALI, Nicolas, 95892 CERGY PONTOISE (FR)
(74) Mandataire: Valeo Powertrain Systems

(57) **Abrégé**

Equipement (1) de charge d'unités de stockage d'énergie électrique (4) de véhicules, l'équipement (1) comprenant une enceinte (2) définissant des logements (3), chaque logement (3) étant apte à recevoir au moins une unité de stockage d'énergie électrique (4), l'équipement comprenant un circuit d'alimentation électrique (5) des unités de stockage d'énergie électrique (4), ce circuit d'alimentation électrique (5) comprenant :
- une unité de contrôle (7),
- un sous-circuit primaire (8), apte à être connecté à un réseau de tension, et
- une pluralité de sous-circuits secondaires (10), aptes à être chacun connectés à une ou plusieurs unités de stockage d'énergie électrique (4),
le sous-circuit primaire (8) et les sous-circuits secondaires (10) étant configurés de manière à échanger de l'énergie électrique sans contact par couplage inductif pour la charge des unités de stockage d'énergie électrique (4).

## Description

La présente invention concerne un équipement de charge d'unités de stockage d'énergie électrique de véhicules.

Ces unités de stockage d'énergie électrique sont par exemple des batteries servant à la propulsion électrique de ces véhicules. Les véhicules sont par exemple des véhicules qualifiés de « véhicules de petite mobilité », par exemple des vélos électriques, des tricycles électriques, des trottinettes électriques ou des motos électriques. Plus globalement, l'invention s'applique à toute forme de mobilité électrique, qu'il s'agisse d'un engin roulant sur terre via quatre, trois, deux roues ou tout autre nombre de roues, ou un engin se déplaçant dans les airs ou sur l'eau dont l'unité de stockage d'énergie électrique peut être manipulée hors du véhicule pour être rechargée.

L'invention s'applique notamment pour des unités de stockage d'énergie électrique dont la tension nominale est comprise entre 12V et 60V, cette tension nominale pouvant par exemple être égale à 12V, à 24V ou à 48V Des unités de stockage d'énergie électrique dont la tension nominale est supérieure à 60V sont cependant possibles.

Il est connu de fournir des équipements permettant la charge simultanée de plusieurs unités de stockage d'énergie électrique. De tels équipements sont par exemple disposés dans des lieux de passage et permettent à des utilisateurs de charger l'unité de stockage d'énergie électrique de leur véhicule entre deux déplacements. Il est connu d'utiliser un circuit filaire depuis le réseau jusqu'à l'unité de stockage d'énergie pour effectuer la charge ce qui pose des problèmes de coût d'installation et de facilité d'utilisation.

L'invention vise à améliorer encore les équipements permettant la charge simultanée de plusieurs unités de stockage d'énergie électrique de véhicules et elle y parvient, selon l'un de ses aspects, à l'aide d'un équipement de charge d'unités de stockage d'énergie électrique de véhicules, l'équipement comprenant une enceinte définissant des logements, chaque logement étant apte à recevoir au moins une unité de stockage d'énergie électrique, l'équipement comprenant un circuit d'alimentation électrique des unités de stockage d'énergie électrique, ce circuit d'alimentation électrique comprenant :
- une unité de contrôle,
- un sous-circuit primaire, apte à être connecté à un réseau de tension, et
- une pluralité de sous-circuits secondaires, aptes à être chacun connectés à une ou plusieurs unités de stockage d'énergie électrique,
le sous-circuit primaire et les sous-circuits secondaires étant configurés de manière à échanger de l'énergie électrique sans contact par couplage inductif pour la charge des unités de stockage d'énergie électrique.

L'invention, en assurant un couplage inductif pour la charge des unités de stockage d'énergie électrique, permet de simplifier le câblage électrique et d'en réduire le coût par rapport aux solutions exclusivement filaires. L'invention procure également comme avantage d'améliorer l'isolation électrique entre les différentes unités de stockage d'énergie électrique puisqu'elles ne sont pas reliées entre de façon filaire mais séparées par une isolation galvanique. L'emploi d'un échange d'énergie électrique sans contact permet également de moduler de façon simple le nombre de sous-circuits secondaires contrairement aux solutions filaires dans lesquelles le nombre de sous-circuits secondaires doit être défini dès la conception, ce qui conduit souvent à un dimensionnement en fonction du nombre maximum de sous-circuits secondaires, que ce nombre maximum soit effectif ou non.

Les différentes unités de stockage d'énergie électrique peuvent ne pas être connectées électriquement entre elles par le circuit d'alimentation électrique autrement que par couplage inductif. Les différentes unités de stockage d'énergie électrique sont par exemple différentes de batteries montées en série ou en parallèle, ou différentes de bras parallèles comprenant chacun plusieurs batteries en série.

Chaque sous-circuit secondaire peut être apte à être connecté à une unique unité de stockage d'énergie électrique.

L'enceinte est distincte d'un composant embarqué sur un véhicule. L'enceinte est par exemple immobile par rapport au sol.

Chaque logement de l'enceinte peut être apte à recevoir uniquement une unité de stockage d'énergie électrique. Cette unité de stockage d'énergie électrique est par exemple retirée du logement lorsqu'elle est chargée.

Chaque sous-circuit secondaire est par exemple associé à uniquement un logement de l'enceinte, étant par exemple disposé dans ce logement et/ou sur ou dans tout ou partie des parois délimitant ce logement. Le sous-circuit secondaire est par exemple intégré en tout ou partie à l'intérieur d'une ou plusieurs parois délimitant le logement, ou il est par exemple en tout ou partie fixé sur une ou plusieurs de ces parois.

Chaque logement présente par exemple une porte, étant alors appelé « casier ».

Dans tout ce qui précède, le sous-circuit primaire peut comprendre :
- un premier connecteur apte à être branché au réseau électrique,
- un convertisseur de tension, notamment configuré pour élever la fréquence de la tension du réseau électrique, et
- une première cellule inductive interagissant avec les deuxièmes cellules inductives de sous-circuits secondaires auxquels sont branchées les unités de stockage d'énergie électrique pour l'échange d'énergie électrique sans contact par couplage inductif.

Le réseau électrique fournit par exemple une tension efficace nominale de 230V avec une fréquence de 50 Hz ou 60 Hz. Le réseau électrique est par exemple monophasé ou triphasé.

L'invention n'est cependant pas limitée à un réseau véhiculant une tension alternative, pouvant en variante véhiculer une tension continue, par exemple de plusieurs centaines de V

Le réseau électrique est par exemple un réseau électrique régional ou national. En variante, il peut s'agir d'un réseau local indépendant, comprenant par exemple une ou plusieurs batteries alimentées par des sources d'énergie telles que éoliennes, des panneaux solaires, des piles à combustible ou des générateurs d'hydroélectricité.

Le convertisseur de tension comprend par exemple en série un premier étage redresseur et un étage onduleur, le premier étage redresseur étant disposé dans le sous-circuit primaire en série entre le premier connecteur et l'étage onduleur. Le premier étage redresseur redresse la tension du réseau. Il met par exemple en oeuvre des interrupteurs commandables tels que des transistors ou des thyristors. Le premier étage redresseur présente par exemple deux bras en parallèle par phase du réseau. Ce premier étage redresseur peut réaliser une fonction de correction de facteur de puissance (« Power factor correction » en anglais). Une telle correction permet de façon connue que le courant prélevé sur le réseau soit le plus proche d'un sinus parfait à la pulsation du réseau. On réduit ainsi le courant réactif et les sous-harmoniques qui augmentent les pertes énergétiques en conduction.

En variante, le premier étage redresseur ne réalise pas la correction de facteur de puissance, un étage de correction de facteur de puissance étant alors interposé entre le premier étage redresseur et l'étage onduleur.

L'étage onduleur met par exemple en oeuvre des interrupteurs commandables tels que des transistors ou des thyristors. Cet étage onduleur est par exemple un pont complet piloté en décalage de phase (« phase shifted full bridge » en anglais). L'étage onduleur présente une fréquence de commutation qui peut être comprise entre la fréquence du réseau électrique et toute valeur supérieure à celle-ci, par exemple 1 kHz, 10 kHz, 100 kHz ou 1 MHz. Le cas échéant, la fréquence en sortie de l'étage onduleur est supérieure à la fréquence du réseau, ce qui permet de réduire la taille et donc le coût des composants de la première cellule inductive. L'étage onduleur présente par exemple deux bras en parallèle.

En variante de ce qui vient d'être décrit, le convertisseur de tension ne comprend pas un premier étage redresseur en série avec un étage onduleur, mais un étage d'élévation de fréquence tel que divulgué dans la demande WO2020260032.

La première cellule inductive peut comprendre en série : une bobine permettant la génération d'énergie magnétique, et un condensateur, formant ainsi une cellule résonante.

Dans tout ce qui précède, chaque sous-circuit secondaire peut comprendre:
- une deuxième cellule inductive interagissant avec la première cellule inductive du sous-circuit primaire pour l'échange d'énergie électrique sans contact par couplage inductif,
- un deuxième connecteur auquel un connecteur de l'unité de stockage d'énergie électrique est apte à être branché, et
- un deuxième étage redresseur configuré pour convertir la tension alternative issue de la deuxième cellule inductive en une tension continue vers le connecteur.

La deuxième cellule inductive peut comprendre en série : une bobine permettant de récupérer l'énergie magnétique issue de la première cellule inductive, et un condensateur, formant ainsi une cellule résonante. Le cas échéant, ces bobines et ces condensateurs sont choisis de manière à ce que la première cellule inductive et la deuxième cellule inductive aient la même fréquence de résonance.

Le cas échéant, une liaison filaire peut exister entre les différents sous-circuits du circuit d'alimentation électrique pour la transmission d'information. En variante, aucune liaison filaire n'existe entre le sous-circuit primaire et les sous-circuits secondaires. L'unité de contrôle peut alors commander l'injection d'un signal haute fréquence de type AM ou FM en superposition du signal de puissance selon un protocole série type CAN/LIN ou autre de manière à transmettre via la liaison magnétique entre la première et les deuxièmes cellules de l'information en temps réel par modulation de fréquence.

Tous les sous-circuits secondaires peuvent être identiques.

L'unité de contrôle peut être configurée pour commander chaque étage redresseur d'un sous-circuit secondaire auquel un connecteur d'une unité de stockage d'énergie électrique est branché pour que cet étage redresseur réalise une adaptation d'impédance de l'impédance de l'unité de stockage d'énergie électrique.

Le deuxième étage redresseur comprend par exemple deux bras pour redresser la tension alternative. Dans un tel cas d'un deuxième étage redresseur à deux bras avec chacun un point milieu, pour réaliser l'adaptation d'impédance précitée, on fait varier l'impédance équivalente entre le premier et le deuxième point milieu, indépendamment de l'impédance équivalente de la charge représentée par l'unité de stockage d'énergie électrique. Pour ce faire, l'un des deux bras peut commuter à la fréquence de l'énergie transmise par voie magnétique et avec un rapport cyclique de 50%, et l'autre bras peut commuter à une fréquence supérieure à celle de l'énergie transmise par voie magnétique, par exemple à une fréquence égale ou supérieure à 5 fois la fréquence de l'énergie transmise par voie magnétique, et avec un rapport cyclique modulé selon le courant alternatif mesuré et la tension sur l'entrée alternative des deux bras de commutation. On peut ainsi, conformément à l'enseignement de la demande de numéro de dépôt 2209978 déposée le 30/09/2022 par Valeo Systèmes de Contrôle Moteur, échanger sans contact par couplage inductif de l'énergie électrique ayant une fréquence inférieure à 5 kHz, par exemple inférieure à 3kHz, ou encore inférieure à 2kHz ou 1kHz, notamment encore sensiblement égale à 400 Hz ou 50 Hz. L'invention peut alors permettre une charge inductive basse fréquence. Une autre façon de bénéficier d'une charge inductive basse fréquence est d'utiliser l'enseignement de la demande de numéro de dépôt PCT/EP2023/059845 déposée le 14/04/2023 par Valeo Equipements Electriques Moteur. En variante, l'énergie électrique échangée sans contact par couplage inductif peut avoir une fréquence de l'ordre de 85 kHz ou plus.

Lorsqu'un connecteur d'une unité de stockage d'énergie électrique est branché à un connecteur d'un deuxième circuit du circuit d'alimentation électrique, l'unité de contrôle peut être configurée pour détecter un paramètre spécifique de ce connecteur de l'unité de stockage d'énergie électrique. Ce paramètre spécifique, pouvant être qualifié de « signature » de l'unité de stockage d'énergie électrique en question est par exemple une valeur de résistance du connecteur associé à l'unité de stockage d'énergie électrique ou du câble reliant ce connecteur et cette unité de stockage d'énergie électrique. Ce paramètre spécifique permet par exemple au circuit d'alimentation électrique d'adapter la charge aux spécificités de l'unité de stockage d'énergie électrique, par exemple sa tension nominale, son type que l'on peut encore exprimer comme étant la technologie selon laquelle elle est réalisée tels que ses constituants chimiques...

Dans tout ce qui précède, les logements peuvent s'étendre dans l'enceinte en rangée entre deux extrémités pour la rangée de ces logements. Chaque logement présente par exemple la même dimension ou non, le long de la rangée et/ou selon la ou les dimensions perpendiculaires à cette rangée.

La première cellule inductive peut être physiquement répartie entre ces deux extrémités. Autrement dit, les logements sont disposés physiquement entre les parties de la première cellule inductive, notamment entre les parties de la bobine de cette cellule inductive. La première cellule inductive comprend par exemple une partie de bobine dont les spires sont disposées dans une extrémité de la rangée et une autre partie de bobine dont les spires sont disposées dans l'autre extrémité de la rangée. Ces deux parties de bobine peuvent être montées en série ou en parallèle. La bobine de cette première cellule inductive s'étend par exemple en partie dans la paroi définissant une première extrémité de la rangée et en partie dans la paroi définissant la deuxième extrémité de la rangée, opposée à la première extrémité. En variante, la bobine de la première cellule inductive s'étend en partie sur la paroi définissant la première extrémité de la rangée et en partie sur la paroi définissant la deuxième extrémité de la rangée.

L'unité de contrôle comprend par exemple un module de commande du sous-circuit primaire qui peut être disposé à proximité de l'une de ces parois définissant une extrémité, étant par exemple fixé sur l'une de ces parois ou intégré à celle-ci. Ce module met par exemple un ou plusieurs microcontrôleurs.

D'un logement à l'autre de la rangée, la deuxième cellule inductive peut avoir physiquement le même positionnement dans le logement, pour tout ou partie des logements de la rangée. Là encore, la bobine de cette deuxième cellule inductive peut s'étendre dans une paroi du logement ou être fixée sur cette paroi du logement. Dans un exemple chaque logement comprend sa propre cellule inductive et ces cellules inductives ont le même positionnement d'un logement à l'autre.

L'unité de contrôle peut comprendre un module de commande par sous-circuit secondaire. Chacun de ces modules de commande peut alors être disposé dans un logement lorsqu'il existe un sous-circuit secondaire par logement. Similairement à ce qui a été mentionné ci-dessus, chaque module de commande d'un sous-circuit secondaire peut être disposé dans ou être fixé sur une paroi du logement, par exemple la même que celle pour la deuxième cellule inductive.

Lorsqu'il existe un sous-circuit secondaire par logement, un connecteur du sous-circuit secondaire peut être disposé dans chaque logement, pour la connexion à un connecteur d'une unité de stockage d'énergie électrique. Sur l'ensemble des logements, ces connecteurs de sous-circuit secondaire peuvent être du même type.

Le cas échéant, l'enceinte définit plusieurs rangées de logements superposés, par exemple deux ou trois rangées, et ces rangées peuvent ou non comprendre le même nombre de logements. Dans un tel cas, chaque rangée présente un sous-circuit secondaire par logement.

Dans tout ce qui précède, l'enceinte peut présenter une armature réalisée en un matériau magnétiquement conducteur, tel que le fer, le nickel, une ferrite selon un alliage nickel-zinc, une ferrite selon un alliage manganèse-zinc, l'acier, un alliage permalloy.L'invention a encore pour objet, selon un autre de ses aspects, l'utilisation de l'équipement tel que défini ci-dessus, plusieurs sous-circuits secondaires étant respectivement branchés à une unité de stockage d'énergie électrique, utilisation dans laquelle on régule, en fonction du nombre d'unités de stockage d'énergie électrique :
- la puissance fournie par le réseau électrique, et/ou
- la répartition de la puissance fournie par le réseau électrique entre les différentes unités de stockage d'énergie électrique.

Le nombre et le type d'unités de stockage d'énergie peuvent permettre à l'unité de contrôle de déterminer la puissance totale devant être fournie par la réseau électrique et/ou la répartition de cette puissance à assurer entre ces différentes unités de stockage d'énergie électrique.

La régulation de la puissance fournie par le réseau électrique peut alors s'effectuer en agissant au moins :
- sur le premier étage redresseur pour réguler la tension continue en amont de l'étage onduleur de ce sous-circuit primaire,
- sur l'étage onduleur du sous-circuit primaire en régulant sa fréquence de commutation et/ou son angle de décalage lorsqu'il s'agit d'un pont complet piloté en décalage de phase,
- sur chaque deuxième étage redresseur d'un sous-circuit secondaire auquel est branchée une unité de stockage d'énergie électrique pour réguler l'impédance équivalente de l'ensemble de ces unités de stockage d'énergie vues depuis le sous-circuit primaire.

La répartition de la puissance fournie par le réseau électrique entre les différentes unités de stockage d'énergie électrique peut s'effectuer en agissant sur chaque deuxième étage redresseur d'un sous-circuit secondaire auquel est branchée une unité de stockage d'énergie électrique pour réguler l'impédance équivalente de ces unités de stockage d'énergie électrique les unes par rapport aux autres.

L'invention a encore pour objet, selon un autre de ses aspects, un procédé de charge d'unités de stockage d'énergie électrique de véhicules à l'aide d'un équipement comprenant une enceinte définissant des logements, chaque logement étant apte à recevoir au moins une unité de stockage d'énergie électrique de véhicule, l'équipement comprenant un circuit d'alimentation électrique des unités de stockage d'énergie électrique, ce circuit d'alimentation électrique comprenant :
- une unité de contrôle,
- un sous-circuit primaire connecté à un réseau de tension, et
- une pluralité de sous-circuits secondaires aptes à être chacun connectés à une ou plusieurs unités de stockage d'énergie électrique,
procédé dans lequel le sous-circuit primaire et les sous-circuits secondaires sont configurés de manière à échanger de l'énergie électrique sans contact par couplage inductif pour la charge des unités de stockage d'énergie électrique.

Selon le procédé ci-dessus, on peut introduire une unité de stockage d'énergie électrique de véhicule dans un logement pour la connecter à un sous-circuit secondaire afin de la charger, puis déconnecter cette unité de stockage d'énergie électrique du sous-circuit secondaire, et la retirer du logement une fois la charge terminée.

L'invention pourra être mieux comprise à la lecture de la description qui va suivre d'un exemple non limitatif de mise en oeuvre de celle-ci et à l'examen du dessin annexé sur lequel :
[Fig.1] représente de façon schématique un équipement pour la charge d'unités de stockage d'énergie électrique de véhicules selon un exemple de mise en oeuvre de l'invention,
[Fig.2] représente de façon schématique le circuit d'alimentation électrique de l'équipement de la figure 1
[Fig.3] représente en forme de schéma bloc un sous-circuit secondaire du circuit d'alimentation électrique de la figure 2, et
[Fig.4] illustre avec un schéma électrique similaire à celui de la figure 2 les différents paramètres sur lesquels on peut agir pour réguler la puissance fournie par le réseau électrique, et/ou pour réguler la répartition de la puissance fournie par le réseau électrique entre les différentes unités de stockage d'énergie électrique.

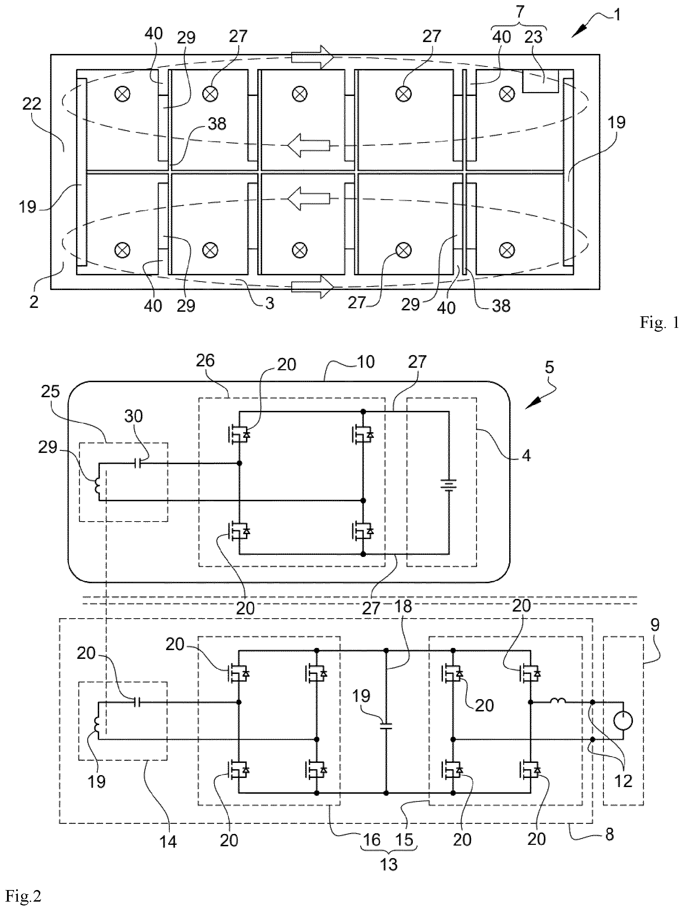

On a représenté sur la figure 1 un équipement 1 de charge d'unités de stockage d'énergie électrique de véhicules, l'équipement 1 comprenant une enceinte 2 définissant des logements 3, chaque logement 3 étant apte à recevoir au moins une unité de stockage d'énergie électrique 4. L'unité de stockage d'énergie électrique 4, non représentée sur la figure 1, est par exemple une batterie de véhicule, telle qu'une batterie de vélo électrique ou de trottinette électrique. Cette batterie a par exemple une tension nominale de 12V ou de 48 V Dans l'exemple considéré, l'enceinte 2 est confondue avec une armature réalisée en métal magnétiquement conducteur, par exemple du fer. Dans l'exemple décrit, chaque logement 3 reçoit une seule unité de stockage d'énergie électrique 4.

On constate sur la figure 1 que l'enceinte 1 définit ici deux rangées de logements superposées, chaque rangée contenant ici cinq logements 3. Cependant, l'invention n'est pas limitée à un nombre particulier de logements 3 par rangée, à un nombre de rangées, et même à un positionnement par rangée.

Chaque logement peut être obturé par une porte, constituant ainsi un casier. L'enceinte peut alors définir des casiers.

On constate encore sur la figure 1 que tous les logements 3 peuvent avoir une même taille, aussi bien en hauteur, qu'en largeur et qu'en profondeur, par rapport à la figure 1. Dans des variantes non représentées, plusieurs tailles sont possibles pour les logements 3 de l'équipement 1 les uns par rapport aux autres.

Comme on peut le voir sur la figure 1, l'équipement 1 comprend un circuit d'alimentation électrique 5 des unités de stockage électrique 4 qui va maintenant être décrit en référence à la figure 2.

Ce circuit d'alimentation électrique 5 comprend :
- une unité de contrôle 7,
- un sous-circuit primaire 8, apte à être connecté à un réseau de tension 9, et
- une pluralité de sous-circuits secondaires 10, aptes à être chacun connectés à une unité de stockage d'énergie électrique 4 dans l'exemple décrit.

Le circuit d'alimentation électrique 5 met en oeuvre un échange d'énergie électrique sans contact par couplage inductif entre le sous-circuit primaire 8 et les sous-circuits secondaires 10, pour la charge des unités de stockage d'énergie électrique.

Dans l'exemple de la figure 2, le sous-circuit primaire 8 comprend :
- un premier connecteur 12 apte à être branché au réseau électrique,
- un convertisseur de tension 13, notamment configuré pour élever la fréquence de la tension du réseau électrique, et
- une première cellule inductive 14 dont le rôle sera décrit ci-après.

Le réseau électrique fournit par exemple une tension efficace nominale de 230V avec une fréquence de 50 Hz ou 60 Hz. Le réseau électrique est par exemple monophasé, respectivement triphasé, auquel cas le premier connecteur 12 est monophasé, respectivement triphasé.

Le convertisseur de tension 13 comprend dans l'exemple considéré en série un premier étage redresseur 15 et un étage onduleur 16, le premier étage redresseur 15 étant en série entre le premier connecteur 12 et l'étage onduleur 16.

Le premier étage redresseur 15 redresse la tension du réseau. Il comprend dans l'exemple décrit deux bras par phase du réseau, chaque bras contenant deux interrupteurs commandables 20 montés en série, tels que des transistors MOS, IGBT ou bipolaires, ou des thyristors. Dans l'exemple décrit, ce premier étage redresseur 15 réalise également une fonction de correction de facteur de puissance (« Power factor correction » en anglais). Ce premier étage redresseur 15 est par exemple de type « Totem POLE dual Boost PFC rectifier » connu dans la littérature électronique.

Entre ce premier étage redresseur 15 et l'étage onduleur 16 se trouve un bus continu 18 ayant un condensateur 19. Ce dernier présente par exemple une capacité de 10µF.

L'étage onduleur 16 comprend dans l'exemple décrit deux bras, chaque bras contenant deux interrupteurs commandables 20 montés en série, tels que des transistors MOS, IGBT ou bipolaires, ou des thyristors. Cet étage onduleur 16 est dans l'exemple décrit un pont complet piloté en décalage de phase (« phase shifted full bridge » en anglais). L'étage onduleur 16 travaille ici à une fréquence de commutation qui peut être comprise entre la fréquence du réseau électrique et toute valeur supérieure à celle-ci, par exemple 1 kHz, 10 kHz, 100 kHz ou 1 MHz.

Dans l'exemple décrit, la sortie alternative de l'étage onduleur 16 est directement connectée à la première cellule inductive 14. Celle-ci comprend ici en série : une bobine 19 permettant la génération d'énergie magnétique, et un condensateur 20, formant ainsi une cellule résonante. La bobine 19 a par exemple une inductance de 20 mH et le condensateur 20 a une capacité de 10 µF.

Comme on peut le voir sur la figure 1, la bobine 19 de la première cellule inductive 14 présente une partie fixée sur une des parois d'extrémité 22 de l'armature pour les rangées de logements 3, et une autre partie fixée sur l'autre paroi d'extrémité 22 de l'armature 2.

Les logements 3 s'étendent ainsi entre les parties de bobines 19. Chaque partie de la bobine 19 comprend par exemple des spires qui s'étendent perpendiculairement au plan de la figure 1.

On constate aussi sur la figure 1 que l'unité de contrôle 7 présente un module de commande 23 qui est disposé à proximité d'une des parois d'extrémité 22 de l'armature.

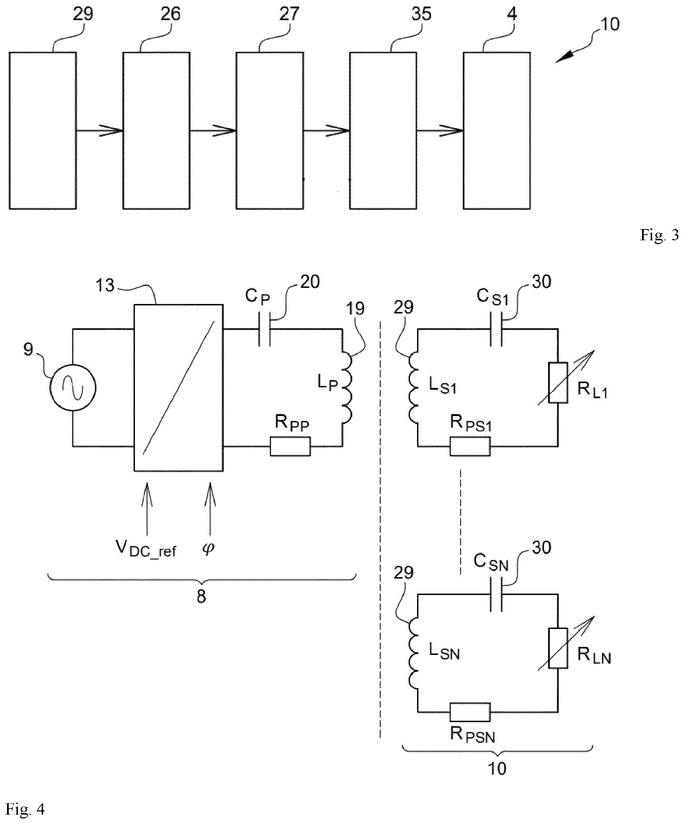

On va maintenant décrire en référence aux figures 2 et 3 un exemple de sous-circuits secondaires 10. Dans l'exemple considéré sur la figure 2, un seul circuit secondaire est représenté bien qu'il existe dans cet exemple autant de sous-circuits secondaires 10 qu'il existe de logements 3. Tous ces sous-circuits secondaires 10 sont ici identiques structurellement parlant.

Chaque sous-circuit secondaire 10 comprend ici:
- une deuxième cellule inductive 25 interagissant avec la première cellule inductive 14 pour l'échange d'énergie électrique sans contact par couplage inductif,
- un deuxième connecteur 27 auquel un connecteur de l'unité de stockage d'énergie électrique 4 est apte à être branché, et
- un deuxième étage redresseur 26 configuré pour convertir la tension alternative issue de la deuxième cellule inductive 25 en une tension continue vers le deuxième connecteur 27.

Comme on peut le voir sur la figure 2, la deuxième cellule inductive 25 comprend ici en série : une bobine 29 permettant de récupérer l'énergie magnétique issue de la première cellule inductive 14, et un condensateur 30, formant ainsi une cellule résonante. Dans l'exemple considéré, la bobine 29 a une inductance de 10 mH et le condensateur 30 a une capacité de 20 µF. La bobine 29 comprend par exemple des spires s'étendant perpendiculairement au plan de la figure 1.

Le deuxième étage redresseur 26 comprend dans l'exemple décrit deux bras, chaque bras contenant deux interrupteurs commandables 20 montés en série, tels que des transistors MOS, IGBT ou bipolaires, ou des thyristors.

Le deuxième connecteur 27 est accessible depuis le logement, comme on peut le voir sur la figure 1. Ce deuxième connecteur 27 est branché via un connecteur à un câble 35 permettant la liaison à l'unité de stockage d'énergie électrique 4.

Comme représenté sur la figure 1, chaque sous-circuit secondaire 10 est ici associé à uniquement un logement 3 de l'enceinte 2. Ici, la bobine 29 d'un sous-circuit secondaire 10 est fixée sur une paroi 38 du logement auquel ce sous-circuit secondaire 10 est associé. On constate sur la figure 1 que, d'un logement 3 à l'autre, les bobines 29 peuvent occuper le même emplacement, à savoir fixées sur une paroi 38 délimitant ce logement 3 d'un logement voisin, à l'exception d'un logement 3 pour lequel cet emplacement est déjà occupé par une partie de la bobine 19 fixée sur une paroi d'extrémité 22.

Comme on peut le voir sur la figure 1, chaque sous-circuit secondaire 10 est associé à un module de commande 40 de ce sous-circuit secondaire 10. Dans l'exemple considéré, chaque module de commande 40 est fixé sur une paroi 38, de manière adjacente à la bobine 29.

Bien qu'aucune liaison filaire de puissance n'existe selon l'invention entre le sous-circuit primaire 8 et les sous-circuits secondaires 9, il est possible d'utiliser une liaison filaire entre les différents modules 23 et 40 de l'unité de contrôle 7. En variante, la communication entre les modules 23 et 40 peut également s'effectuer à travers le couplage magnétique entre cellules 14 et 25, par modulation de fréquence.

On peut voir sur la figure 1, pour chaque rangée de logements 3, le trajet du champ magnétique, représenté en pointillés.

L'équipement 1 qui vient d'être décrit peut être utilisé pour charger simultanément plusieurs unités de stockage d'énergie électrique 4.

Lors d'une utilisation, l'unité de contrôle 7 peut déterminer le nombre de logements dans lesquels une unité de stockage d'énergie électrique 4 est branchée. L'unité de contrôle 7 peut disposer du nombre et du type d'unités de stockage d'énergie électrique 4 pour déterminer la puissance totale devant être fournie par la réseau électrique et la répartition de cette puissance à assurer entre ces différentes unités de stockage d'énergie électrique 4.

Pour réguler la puissance fournie par le réseau électrique, l'unité de contrôle 7 peut alors :
- via le module de commande 23 agir sur le premier étage redresseur 15 pour réguler la tension continue V_{DC_ref} sur le bus continu 18, en amont de l'étage onduleur 16 de ce sous-circuit primaire 8,
- toujours via ce module de commande 23 agir sur l'étage onduleur 16 en régulant sa fréquence de commutation et/ou son angle de décalage ϕ,
- via chaque module de commande 40 agir sur chaque deuxième étage redresseur 26 d'un sous-circuit secondaire 10 auquel est branchée une unité de stockage d'énergie électrique 4 pour réguler l'impédance équivalente de l'ensemble de ces unités de stockage d'énergie 4 vues depuis le sous-circuit primaire 10.

Pour répartir la puissance fournie par le réseau électrique entre les différentes unités de stockage d'énergie électrique 4, l'unité de contrôle 7 peut, via chaque module de commande, agir sur chaque deuxième étage redresseur 26 d'un sous-circuit secondaire 40 auquel est branchée une unité de stockage d'énergie électrique 4 pour réguler l'impédance équivalente de charge (RL₁,... RL_{N}) en entrée de ces deuxièmes étages les unes par rapport aux autres. Sur la figure 4, et contrairement à la figure 2, on a représenté via des résistances R_{PP} et R_{PSi} les pertes cuivres et les pertes alternatives magnétiques dans les sous-circuits correspondants.

L'invention n'est pas limitée à l'exemple qui vient d'être décrit.

## Revendications

1. Equipement (1) de charge d'unités de stockage d'énergie électrique (4) de véhicules, l'équipement (1) comprenant une enceinte (2) définissant des logements (3), chaque logement (3) étant apte à recevoir au moins une unité de stockage d'énergie électrique (4) de véhicule, l'équipement comprenant un circuit d'alimentation électrique (5) des unités de stockage d'énergie électrique (4), ce circuit d'alimentation électrique (5) comprenant :
- une unité de contrôle (7),
- un sous-circuit primaire (8), apte à être connecté à un réseau de tension, et
- une pluralité de sous-circuits secondaires (10), aptes à être chacun connectés à une ou plusieurs unités de stockage d'énergie électrique (4),
le sous-circuit primaire (8) et les sous-circuits secondaires (10) étant configurés de manière à échanger de l'énergie électrique sans contact par couplage inductif pour la charge des unités de stockage d'énergie électrique (4).

2. Equipement selon la revendication 1, chaque sous-circuit secondaire (10) étant apte à être connecté à une unique unité de stockage d'énergie électrique (4).

3. Equipement selon la revendication 1 ou 2, chaque logement (3) de l'enceinte (2) étant apte à recevoir uniquement une unité de stockage d'énergie électrique (4).

4. Equipement selon les revendications 2 et 3, chaque sous-circuit secondaire (10) étant associé à uniquement un logement (3) de l'enceinte, étant notamment disposé dans ce logement (3) et/ou sur ou dans tout ou partie des parois (38) délimitant ce logement (3).

5. Equipement selon l'une quelconque des revendications précédentes, le sous-circuit primaire (8) comprenant :
- un premier connecteur (12) apte à être branché au réseau électrique,
- un convertisseur de tension (13) , notamment configuré pour élever la fréquence de la tension du réseau électrique, et
- une première cellule inductive (14) interagissant avec des deuxièmes cellules inductives (25) de sous-circuits secondaires (10) auxquels sont branchées les unités de stockage d'énergie électrique (4) pour l'échange d'énergie électrique sans contact par couplage inductif.

6. Equipement selon l'une quelconque des revendications précédentes, chaque sous-circuit secondaire (10) comprenant :
- une deuxième cellule inductive (25) interagissant avec la première cellule inductive (14) du sous-circuit primaire (8) pour l'échange d'énergie électrique sans contact par couplage inductif,
- un deuxième connecteur (27) auquel un connecteur de l'unité de stockage d'énergie électrique (4) est apte à être branché, et
- un deuxième étage redresseur (26) configuré pour convertir la tension alternative issue de la deuxième cellule inductive (25) en une tension continue vers le deuxième connecteur (27).

7. Equipement selon la revendication 6, l'unité de contrôle (7) étant configurée pour commander chaque deuxième étage redresseur (26) d'un sous-circuit secondaire (10) auquel un connecteur d'une unité de stockage d'énergie électrique (4) est branché pour que ce deuxième étage redresseur (26) réalise une adaptation d'impédance de l'impédance de l'unité de stockage d'énergie électrique (4).

8. Equipement selon l'une des revendications 5 et selon l'une des revendications 6 ou 7, la première cellule inductive (14) et la deuxième cellule inductive (25) ayant la même fréquence de résonance.

9. Equipement selon l'une quelconque des revendications précédentes, les logements (3) s'étendant dans l'enceinte (2) en rangée entre deux extrémités pour la rangée de ces logements, la première cellule inductive (14) étant physiquement répartie entre ces deux extrémités (22), l'équipement étant notamment tel que, d'un logement (3) à l'autre de la rangée, la deuxième cellule inductive (25) a physiquement le même positionnement dans le logement (3), pour tout ou partie de ces logements (3).

10. Equipement selon l'une quelconque des revendications précédentes, l'enceinte définissant une pluralité de casiers.

11. Equipement selon l'une quelconque des revendications précédentes, le circuit d'alimentation électrique (5) étant tel que les unités de stockage d'énergie électrique (4) ne puissent pas être connectées électriquement entre elles par le circuit d'alimentation électrique (5) autrement que par couplage inductif.

12. Utilisation d'un équipement (1) selon l'une quelconque des revendications précédentes, dans lequel plusieurs sous-circuits secondaires (10) sont respectivement branchés à une unité de stockage d'énergie électrique (4) et dans lequel on régule, en fonction du nombre d'unités de stockage d'énergie électrique (4):
- la puissance fournie par le réseau électrique, et/ou
- la répartition de la puissance fournie par le réseau électrique entre les différentes unités de stockage d'énergie électrique (4).

13. Utilisation selon la revendication 12, le sous-circuit primaire (8) étant selon la revendication 5 et le convertisseur de tension (13) de ce sous-circuit primaire (8) comprenant en série un premier étage redresseur (15) et un étage onduleur (16), le premier étage redresseur (15) étant disposé dans le sous-circuit primaire (8) en série entre le premier connecteur (12) et l'étage onduleur (16), et chaque sous-circuit secondaire (10) étant selon la revendication 7, utilisation dans laquelle la régulation de la puissance fournie par le réseau électrique s'effectue en agissant au moins :
- sur le premier étage redresseur (15) pour réguler la tension continue en amont de l'étage onduleur (16) de ce sous-circuit primaire (8),
- sur l'étage onduleur (16) de ce sous-circuit primaire (8) en régulant sa fréquence de commutation et/ou son angle de décalage,
- sur chaque deuxième étage redresseur (26) d'un sous-circuit secondaire (10) auquel est branchée une unité de stockage d'énergie électrique pour réguler l'impédance équivalente de l'ensemble de ces unités de stockage d'énergie vues depuis le sous-circuit primaire
et/ou dans lequel la répartition de la puissance fournie par le réseau électrique entre les différentes unités de stockage d'énergie électrique (4) s'effectue en agissant sur chaque deuxième étage redresseur (26) d'un sous-circuit secondaire auquel est branchée une unité de stockage d'énergie électrique pour réguler l'impédance équivalente de ces unités de stockage d'énergie électrique les unes par rapport aux autres.

14. Procédé de charge d'unités de stockage d'énergie électrique (4) de véhicules à l'aide d'un équipement (1) comprenant une enceinte (2) définissant des logements (3), chaque logement (3) étant apte à recevoir au moins une unité de stockage d'énergie électrique de véhicule, l'équipement (1) comprenant un circuit d'alimentation électrique (5) des unités de stockage d'énergie électrique, ce circuit d'alimentation électrique comprenant :
- une unité de contrôle (7),
- un sous-circuit primaire (8) connecté à un réseau de tension, et
- une pluralité de sous-circuits secondaires (10) aptes à être chacun connectés à une ou plusieurs unités de stockage d'énergie électrique,
procédé dans lequel le sous-circuit primaire (8) et les sous-circuits secondaires (10) sont configurés de manière à échanger de l'énergie électrique sans contact par couplage inductif pour la charge des unités de stockage d'énergie électrique (4).

15. Procédé selon la revendication 14, dans lequel on introduit une unité de stockage d'énergie électrique de véhicule (4) dans un logement (3) pour la connecter à un sous-circuit secondaire (10) afin de la charger, puis on déconnecte cette unité de stockage d'énergie électrique (4) du sous-circuit secondaire (10), et on la retire du logement (3) une fois la charge terminée.
